# EUROPÄISCHE PATENTANMELDUNG

(11) **EP 1 816 421 A2**
(43) Veröffentlichungstag der Anmeldung: **08.08.2007**
(21) Anmeldenummer: 06126826.4
(22) Anmeldetag: 21.12.2006
(51) Int. Cl.: F25D 27/00

(54) **Beleuchtungsbaugruppe für ein Haushaltsgerät**

(30) Priorität: 06.02.2006 DE 102006005290
(71) Anmelder: BSH Bosch und Siemens Hausgeräte GmbH, 81739 München (DE)
(72) Erfinder: Keller, Hans Gerd, 89537 Giengen (DE); Krauss, Harald, 73430 Aalen (DE); Werner, Hans-Peter, 64853 Otzberg (DE)

(57) **Zusammenfassung**

Eine Beleuchtungsbaugruppe (1) für ein Haushaltsgerät hat einen langgestreckten Grundkörper (7), wobei an einem ersten Längsende des Grundkörpers (7) ein Montageplatz für ein Leuchtmittel (37) geschaffen ist, und einen transparenten Schirm (9), der den Montageplatz überdeckt. Mit dem Schirm (9) is wenigstens ein Lichtleiter (10) optisch verbunden, der sich auf das entgegengesetzte Längsende (12) des Grundkörpers (7) zu erstreckt.

## Beschreibung

Die vorliegende Erfindung betrifft eine Beleuchtungsbaugruppe, die zur Montage im Innenraum eines Kältegerätes vorgesehen ist, um diesen bei geöffneter Tür zu beleuchten. Eine solche Baugruppe umfasst herkömmlicherweise einen Grundkörper, der zur Montage an dem Kältegerätegehäuse vorgesehen ist und als Halterung für ein Leuchtmittel dient, sowie einen transparenten Schirm, der das Leuchtmittel vom Innenraum trennt. Meist hat eine solche Beleuchtungsbaugruppe eine langgestreckte Gestalt, wobei das Leuchtmittel und der transparente Schirm an einem von der Tür abgewandten Längsende des Grundkörpers angebracht sind, um zu verhindern, dass ein Benutzer direkt in das Leuchtmittel blicken kann und durch dieses geblendet wird. Eine solche Anordnung der Beleuchtungsbaugruppe hat zur Folge, dass vor allem der rückwärtige Bereich des Innenraumes gut ausgeleuchtet wird, während der vordere, türnahe Bereich allenfalls eine schwache, indirekte Beleuchtung erfährt.

Aufgabe der Erfindung ist, eine Beleuchtungsbaugruppe zum Beleuchten eines Innenraumes eines schrankartigen Haushaltsgerätes, insbesondere eines Kältegerätes, anzugeben, das eine gleichmäßige und dennoch blendfreie Ausleuchtung des Innenraumes erlaubt.

Die Aufgabe wird erfindungsgemäß dadurch gelöst, dass an einer Beleuchtungsbaugruppe mit einem langgestreckten Grundkörper, wobei an einem ersten Längsende des Grundkörpers ein Montageplatz für ein Leuchtmittel geschaffen ist, und mit einem transparenten Schirm, der den Montageplatz überdeckt, wenigstens ein mit dem Schirm optisch verbundener Lichtleiter sich zum entgegengesetzten Längsende des Grundkörpers hin erstreckt.

Vorzugsweise erstreckt sich der Lichtleiter bis hin zu einer Stirnseite an dem entgegengesetzten Längsende.

Der Lichtleiter erlaubt es, Licht auch an dem vom Leuchtmittel abgewandten Längsende des Grundkörpers abzustrahlen und dadurch eine gleichmäßigere Lichtverteilung zu erzielen. Eine Blendgefahr durch den Lichtleiter ist leicht zu vermeiden, einerseits durch Verlauf und Gestalt des Lichtleiters und die daraus resultierende Richtung des aus dem Lichtleiter abgestrahlten Lichtes, andererseits, indem durch geeignete Dimensionierung von Einkoppelflächen, über die Licht des Leuchtmittels in den Lichtleiter eintritt, die Gesamtintensität des durch den Lichtleiter beförderten Lichtes nicht zu hoch festgelegt wird.

Um eine verlustarme Einkopplung von Licht in den Lichtleiter zu erzielen, ist dieser zweckmäßigerweise einteilig mit dem Schirm geformt.

Im Interesse eines einfachen Zusammenbaus kann der Lichtleiter an einer Außenfläche des Grundkörpers entlanggeführt sein. Vorzugsweise sind zwei Lichtleiter an entgegengesetzten Längsseiten des Grundkörpers entlanggeführt.

Einerseits zur Vereinfachung der Montage, andererseits im Hinblick auf die Stabilität der Lichtleiter ist es zweckmäßig, wenn diese einen winkelförmigen Querschnitt haben. Zweckmäßigerweise verlängern die Außenflächen des Winkels bündig Außenflächen des Grundkörpers.

Vorzugsweise ist der Lichtleiter - und ggf. mit ihm der Schirm - am Grundkörper verrastet und durch Verschieben in der Längsrichtung des Lichtleiters entrastbar.

Zu diesem Zweck kann der Grundkörper einen sich in der Längsrichtung erstreckenden Schlitz aufweisen, in den eine Zunge des Lichtleiters eingreift. Dieses Zunge sollte Spiel in der Längsrichtung haben, um die Entrastung des Lichtleiters zu erlauben, während in Breitenrichtung des Schlitzes ein Spiel zwischen dem Schlitz und der Zunge möglichst gering sein sollte, um den Lichtleiter in Richtung der Breite des Schlitzes exakt zu fixieren.

Zur Fixierung des Lichtleiters am Grundkörper kann ferner eine sich in der Längsrichtung erstreckende Rippe des Grundkörpers dienen, von der eine Flanke einer vom Lichtleiter berührten Anlagefläche des Grundkörpers zugewandt ist. Indem ein Vorsprung des Lichtleiters an dieser Flanke anliegt, ist der Lichtleiter senkrecht zu der Anlagefläche fixiert.

Eine kompakte, die Haube und den Lichtleiter in zwei Raumrichtungen fixierende Anordnung ist realisierbar, wenn der oben erwähnte Schlitz in der Anlagefläche gebildet ist.

Ferner kann am Grundkörper zwischen der Rippe und der Anlagefläche ein Steg vorgesehen sein, den der Vorsprung des Lichtleiters beim Entrasten überwindet.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine perspektivische Ansicht eines Kältegerätes, das mit einer erfindungsgemäßen Beleuchtungsbaugruppe ausgestattet ist;
- Fig. 2: eine perspektivische Ansicht der Beleuchtungsbaugruppe im zusammengefügten Zustand;
- Fig. 3: die Beleuchtungsbaugruppe mit vom Grundkörper getrenntem Schirm;
- Fig. 4: einen Teilschnitt durch die Beleuchtungsbaugruppe entlang der in Fig. 2 mit IV,IV bezeichneten Ebene; und
- Fig. 5: einen Schnitt durch die Beleuchtungsbaugruppe entlang der in Fig. 2 mit V-V bezeichneten Ebene.

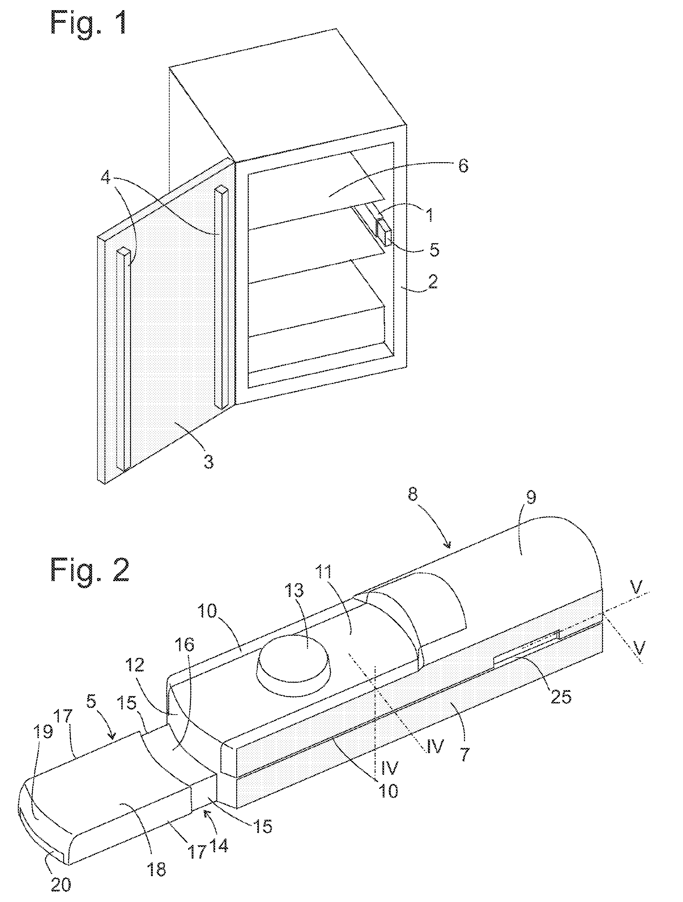

Fig. 1 zeigt eine schematische perspektivische Ansicht eines Kühlschranks als Beispiel für ein Haushaltsgerät mit einer Beleuchtungsbaugruppe 1 gemäß der vorliegenden Erfindung. Die Baugruppe 1 ist an der Innenseite einer Seitenwand 2 des Kühlschrankkorpus befestigt und in dessen Tiefenrichtung langgestreckt. An dem der Tür 3 des Kühlschranks zugewandten Längsende der Baugruppe 1 befindet sich eine in der Tiefenrichtung verschiebbare Kappe 5, die bei geschlossener Tür 3 aus ihrer in der Figur gezeigten ausgefahrenen Stellung durch einen an sie anschlagenden Holm 4 der Tür in eine zurückgeschobene Stellung verdrängt wird. Über die Kappe 5 ist ein nicht dargestellter Schalter im Inneren der Baugruppe 1 betätigbar. In der ausgefahrenen Stellung der Kappe 5 ist der Schalter geschlossen und ein über ihn versorgtes Leuchtmittel der Baugruppe 1 ist eingeschaltet; in der zurückgeschobenen Stellung der Kappe 5 ist der Schalter offen und das Leuchtmittel ausgeschaltet. Der Holm 4 dient nicht nur zum Betätigen des Schalters, sondern in an sich bekannter Weise auch als Aufhängung für in der Figur nicht dargestellte Türabsteller.

Fig. 2 zeigt die Beleuchtungsbaugruppe 1 in einer vergrößerten Ansicht. Sie umfasst einen aus opakem Kunststoff gespritzten Grundkörper 7 von langgestreckter Form, dessen in der Perspektive der Figur 2 untere Seite zur Montage an der Seitenwand 2 vorgesehen ist, und eine an dem Grundkörper 7 lösbar verrastete Lampenabdeckung 8 aus glasklarem Kunststoff. Die Lampenabdeckung 8 umfasst eine von der Tür 3 abgewandte, sich über die gesamte Höhe des Grundkörpers 7 erstreckende Haube 9 von in etwa halbzylindrischer Form, das eine Aussparung des Grundkörpers verdeckt, die vorgesehen ist, um eine nicht dargestellte Glühbirne aufzunehmen, und zwei Licht leitende Arme 10, die sich beiderseits eines Einstellabschnitts 11 des Grundkörpers 7 geradlinig erstrecken und an einer der Tür zugewandten Stirnseite 12 des Grundkörpers 7 bündig mit dem Einstellabschnitt 11 abschließen. Durch eine kreisrunde Öffnung des Einstellabschnitts 11 erstreckt sich ein Drehknopf 13, über den ein im Inneren des Grundkörpers 7 angebrachter Temperaturregler einstellbar ist.

Der Grundkörper 7 ist über die Stirnseite 12 hinaus zur Tür 3 hin durch einen Trägerabschnitt 14 verlängert, auf dem die Kappe 5 verschiebbar ist. Der Trägerabschnitt 14 ist von im Wesentlichen rechteckigem Querschnitt und ist an drei Längswänden 15, 15, 16, die zwei Schmalseiten und eine Breitseite des Querschnitts bilden, von parallelen Wänden 17, 17, 18 der Kappe 5 umgeben. Eine zweite Breitseite des Trägerabschnitts 14 ist vorgesehen, um unmittelbar an der Seitenwand 2 montiert zu werden.

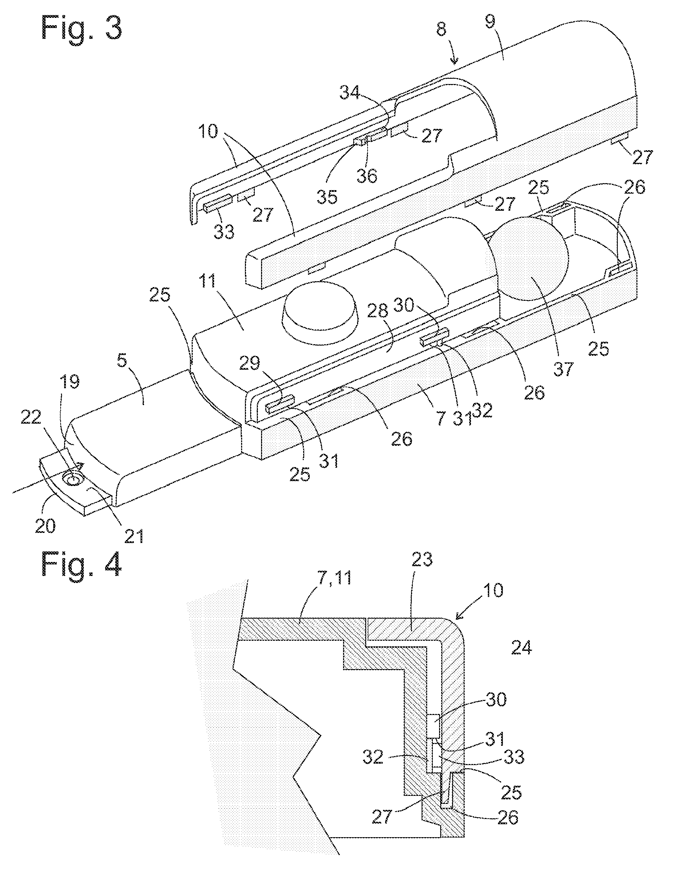

An einer Stirnseite 19 der Kappe 5 ist ein randoffener Ausschnitt gebildet, in welchem eine Spitze 20 des Trägerabschnitts 14 sichtbar ist. In der in Fig. 2 gezeigten ausgefahrenen Stellung der Kappe 5 sind die Stirnseite 19 und die Spitze 20 zueinander bündig. In einer durch Kontakt mit einem der Türholme 4 eingedrückten Stellung der Kappe 5, wie in Fig. 3 gezeigt, steht die Spitze 20 über die Stirnseite 19 über, und die Wände 17, 18 der Kappe berühren die Stirnseite 12 des Grundkörpers 7.

Die Spitze 20 gehört zu einer Platte 21 des Trägerabschnitts, in der eine zentrale Öffnung 22 gebildet ist. Die Öffnung 22 ist vorgesehen, um eine nicht gezeigte Schraube darin aufzunehmen, die die Beleuchtungsbaugruppe 1 an der Seitenwand 2 verankert. In zurückgedrängtem Zustand der Kappe 5 liegt die Öffnung 22 frei, und die Schraube kann entfernt werden, so dass die Beleuchtungsbaugruppe 1 im Bedarfsfall abmontiert und repariert werden kann.

Anhand von Fig. 3, die den Grundkörper 7 und die Lampenabdeckung 8 getrennt voneinander zeigt, und von Fig. 4, die einen Schnitt durch die Beleuchtungsbaugruppe 1 entlang der Ebene IV-IV von Fig. 2 zeigt, wird deutlich, wie die Lampenabdeckung 8 am Grundkörper 7 befestigt ist. Der Grundkörper 7 hat in Höhe des Einstellabschnitts 11 einen in etwa rechteckigen Querschnitt, der an zwei Ecken L-förmig ausgespart ist. Die Aussparungen sind ausgefüllt durch die im Querschnitt ebenfalls L-förmigen Arme 10 der Lampenabdeckung 8 mit Schenkeln 23, 24. Die Außenseiten der Schenkel 23, 24 verlängern jeweils bündig angrenzende Außenflächen des Grundkörpers 7. Die freien Enden der längeren Schenkel 24 der zwei Arme 10 berühren jeweils eine Anlagefläche 25, die sich auf drei Seiten um den Grundkörper 7 herumzieht und an den beiden Längsseiten jeweils mehrere Schlitze 26 aufweist. Von den freien Enden der Schenkel 24 stehen Zungen 27 ab, die jeweils so bemessen sind, dass sie mit geringem Spiel in Breitenrichtung der Schlitze 26 und mit einem Spiel von wenigen Millimetern in Längsrichtung der Schlitze 26 in diese einführbar sind.

An zwei an die Anlagefläche 25 angrenzenden Wandflächen 28 der L-förmigen Aussparungen des Grundkörpers 7 sind jeweils zwei kurze Rippen 29, 30 geformt. Die Rippen 29, 30 haben jeweils eine in der Perspektive der Fig. 3 vom Betrachter abgewandte Seitenflanke 31, die der Anlagefläche 25 parallel gegenüberliegt. Zwischen einer dieser Rippen 30 und der Anlagefläche 25 ist an der Wandfläche 28 ein Steg 32 geformt.

Die zwei Arme 10 sind jeweils mit zwei Rippen 33, 34 versehen, die in einer Stellung, in welcher die Lampenabdeckung 8 auf der Anlagefläche 25 anliegt und die Spitzen der Arme 10 mit der Stirnseite 12 bündig sind, zwischen die Rippen 29, 30 und die Anlagefläche 25 eingreifen und gegen die Rippen 29, 30 drücken. Die hinteren Rippen 34 der zwei Arme 10 sind jeweils mit einer angeschrägten Vorderseite 35 und einer Kerbe 36 versehen.

Die Rippen 29, 30, 33, 35, die Schlitze 26 und Zungen 27 sind in Bezug zueinander so platziert, dass die Rippen 29, 30 des Grundkörpers 7 und 33, 34 der Arme 10 einander nicht behindern, wenn die Zungen 27 in die Schlitze 26 an deren in der Perspektive der Fig. 4 hinterem Ende eingeführt werden und die Arme 10 auf der Anlagefläche 25 zu liegen kommen. Wenn anschließend die Lampenabdeckung 8 vorwärts verschoben wird und die Zungen 27 in den Schlitzen 26 nach vorn rücken, greifen gleichzeitig die Rippen 33, 34 zwischen die Rippen 29, 30 und die Auflagefläche 25 ein. Dabei muss die Rippe 34 einen Widerstand des Steges 32 überwinden. Um dies zu erleichtern, ist die angeschrägte Vorderseite 35 vorgesehen. Wenn die Lampenabdeckung 8 ihre Montagestellung am Grundkörper 7 erreicht hat, rückt der Steg 32 in die Kerbe 36 der Rippe 34 ein und verrastet so die Lampenabdeckung 8.

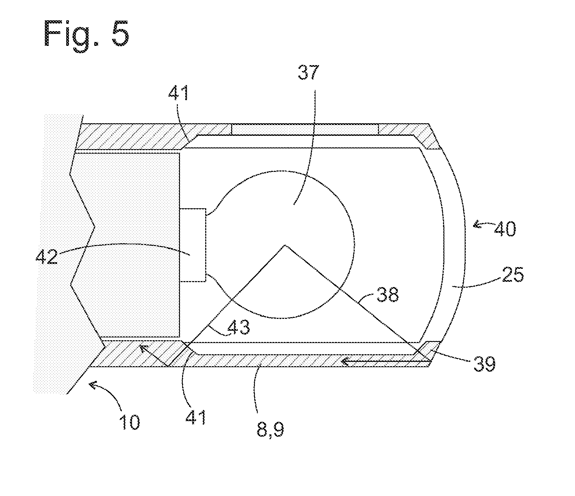

Fig. 5 veranschaulicht den Strahlengang in der Beleuchtungsbaugruppe 1 anhand eines Schnitts entlang der in Fig. 2 mit V-V bezeichneten Ebene. Von dem von einer Glühbirne 37 emittierten Licht durchquert ein Großteil die Haube 9, ohne reflektiert zu werden, und leuchtet den hinteren Bereich des Innenraumes des Kühlschranks aus. Ein Teil des Lichtes, symbolisiert durch einen Strahl 38, tritt in einen Randsteg 39 der Haube 9 ein, der eine rückwärtige Belüftungsöffnung 40 umgibt. Während die innere Oberfläche des Randsteges 39 in etwa senkrecht auf dem Strahl 38 steht, ist die Außenseite so orientiert, dass ein an ihr reflektierter Teil des Strahles 38 im Wesentlichen in Längsrichtung der Arme 10 reflektiert wird und sich so durch das transparente Plastikmaterial der Lampenabdeckung 8 zum Vorderende der Arme 10 hin ausbreitet.

Eine weitere Einkoppelzone 41 ist in der Haube 9 beiderseits eines Sockels 42 der Glühbirne 37 gebildet. Auch hier trifft ein Lichtstrahl 43 von der Glühbirne 37 im Wesentlichen normal oder unter einem Winkel auf, unter dem der Lichtstrahl nach vorn, das heißt nach links in der Darstellung der Fig. 5, gebrochen wird. Der gebrochene Lichtstrahl trifft unter einem großen Winkel auf die Außenseite der Lampenabdeckung 8 und wird dort je nach Größe dieses Winkels verlustarm oder durch Totalreflexion verlustfrei reflektiert, bis er an der Spitze eines Armes 10 austritt.

## Patentansprüche

1. Beleuchtungsbaugruppe (1) für ein Haushaltsgerät, mit einem langgestreckten Grundkörper (7), wobei an einem ersten Längsende des Grundkörpers (7) ein Montageplatz für ein Leuchtmittel (37) geschaffen ist, und mit einem transparenten Schirm (9), der den Montageplatz überdeckt, **dadurch gekennzeichnet, dass** wenigstens ein mit dem Schirm (9) optisch verbundener Lichtleiter (10) sich zum entgegengesetzten Längsende des Grundkörpers (7) hin erstreckt.

2. Beleuchtungsbaugruppe nach Anspruch 1, **dadurch gekennzeichnet, dass** der Lichtleiter (10) sich bis zu einer Stirnseite (12) des entgegengesetzten Längsendes erstreckt.

3. Beleuchtungsbaugruppe nach Anspruch 1 oder 2, **dadurch gekennzeichnet, dass** der Lichtleiter (10) an einer Außenfläche des Grundkörpers (7) entlanggeführt ist.

4. Beleuchtungsbaugruppe nach einem der vorhergehenden Ansprüche, **dadurch gekennzeichnet, dass** zwei Lichtleiter (10) an entgegengesetzten Längsseiten des Grundkörpers (7) entlanggeführt sind.

5. Beleuchtungsbaugruppe nach einem der Ansprüche 1 oder 4, **dadurch gekennzeichnet, dass** die Lichtleiter (10) einteilig mit dem Schirm (9) geformt sind.

6. Beleuchtungsbaugruppe nach einem der Ansprüche 1 bis 5, **dadurch gekennzeichnet, dass** die Lichtleiter (10) einen winkelförmigen Querschnitt haben, wobei die Außenflächen des Winkels Außenflächen des Grundkörpers (7) bündig verlängern.

7. Beleuchtungsbaugruppe nach einem der vorhergehenden Ansprüche, **dadurch gekennzeichnet, dass** der Lichtleiter (10) am Grundkörper (7) verrastet und durch Verschieben in seiner Längsrichtung entrastbar ist.

8. Beleuchtungsbaugruppe nach Anspruch 7, **dadurch gekennzeichnet, dass** der Grundkörper (7) einen sich in der Längsrichtung erstreckenden Schlitz (26) aufweist, in den ein Vorsprung (27) des Lichtleiters (10) mit Spiel in der Längsrichtung eingreift.

9. Beleuchtungsbaugruppe nach Anspruch 7 oder 8, **dadurch gekennzeichnet, dass** der Grundkörper (7) eine sich in der Längsrichtung erstreckende Rippe (29, 30) trägt, von der eine Flanke (31) einer vom Lichtleiter (10) berührten Anlagefläche (25) des Grundkörpers (7) zugewandt ist, und dass ein Vorsprung (33, 34) des Lichtleiters (10) an der Flanke (31) anliegt.

10. Beleuchtungsbaugruppe nach Anspruch 8 und Anspruch 9, **dadurch gekennzeichnet, dass** der Schlitz (26) in der Anlagefläche (25) gebildet ist.

11. Beleuchtungsbaugruppe nach Anspruch 9 oder 10, **dadurch gekennzeichnet, dass** der Grundkörper (7) zwischen der Rippe (30) und der Anlagefläche (25) einen Steg (32) trägt, den der Vorsprung (34) des Lichtleiters (10) beim Entrasten überwindet.
